# EUROPEAN PATENT APPLICATION

(11) **EP 2 713 633 A1**
(43) Date of publication of application: **02.04.2014**
(21) Application number: 12306194.7
(22) Date of filing: 28.09.2012
(51) Int. Cl.: H04W 4/00

(54) **Configuring an application enbedded in a user equipment**

(71) Applicant: Orange, 75015 Paris (FR)
(72) Inventor: Budzisz, Jaroslaw, 01-231 Warszawa (PL); Sapieha, Dariusz, 05-800 Pruszków (PL)

(57) **Abstract**

The invention relates to a method for automatically configuring an application embedded in a user equipment comprising contactless transmission means, the method comprising the following steps executed by the user equipment: Receiving through the contactless transmission means a message comprising configuration information,
- Determining whether the received configuration information are valid,

If so, determining whether to modify the configuration of the application using the received configuration information.

## Description

The present invention generally relates to the configuration of applications embedded in user equipments.

With the recent development of Smart devices, such as Smartphones and tablets, the number of applications intended to be installed on such devices is increasing.

Different methods for configuring such applications are already known. A first configuration method consists in pushing the configuration information from a server based in a communication network to which the user equipment is attached. The user of the user equipment has no control on the configuration of the application.

A second configuration method consists in the user keyboarding the configuration information on the user equipment. Even if the user has more control on the configuration of the application, such a method is risky because configuration information is often complex and keyboarding such information is source of errors leading to a malfunctioning of the configuration and of the application. Furthermore, such a method not user friendly because it is tedious to keyboard such complex information as configuration information.

It is an objective of the present invention to overcome disadvantages and/or make improvements in the prior art.

In that respect, the present invention relates to a method for automatically configuring an application embedded in a user equipment comprising contactless transmission means, the method comprising the following steps executed by the user equipment: Receiving through the contactless transmission means a message comprising configuration information,
- Determining whether the received configuration information are valid,
- If so, determining whether to modify the configuration of the application using the received configuration information.

Thus the invention provides an user friendly and errorless method for configuring an application embedded in a user equipment.

The method of the invention relies on the use of the contactless capability of the user equipment. This allows the user of the user equipment to fully control the configuration of an application on their user equipment, in particular by choosing the moment of the configuration.

By using the contactless capability of the user equipment, the user of the user equipment does not have to keyboard the configuration information, the keyboarding of the configuration information being the main source of errors occurring during the configuration of an application leading to a malfunctioning of said application.

The method of the invention offers a secure way of configuring an application because the validity of the configuration information received through the contactless transmission means of the user equipment is check. Thus, non valid configuration information are discarded before being processed by the user equipment.

According to a characteristic of the method object of the invention, the received configuration information being encrypted, the method comprises, prior to determining the validity of the configuration information, a step of deciphering the received configuration information.

This ensures that the configuration information cannot be used by a user who is not entitled to use this configuration information to configure an application on their own user equipment.

According to a characteristic of the method object of the invention, the step of determining the validity of the configuration information consists in comparing the received configuration information with a template of configuration information.

Thus the user equipment does not require high computing capabilities.

According to a characteristic of the method object of the invention, the step of determining whether to modify the configuration of the application consists in :
- Checking whether the application is already installed in the user equipment,
- If so, comparing a first parameter representing the version of the application with a second parameter extracted from the received configuration information representing the current version of the application,
- If the first and second parameter are distinct, modifying the configuration of the application using the received configuration information.

If the application is not installed yet on the user equipment, then the configuration of the application consists in installing the current version of the application.

If the application is already installed on the user equipment, then the user equipment checks what version of the application is already installed on the user equipment and if this version in not the current one, then, the current version of the application is installed.

Another object of the invention is a user equipment capable of automatically configuring an application embedded in said user equipment, the user equipment comprising:
- contactless transmission means enabling the reception of a message comprising configuration information, means for determining whether the received configuration information are valid,
- means for determining whether to modify the configuration of the application using the received configuration information.

Such a user equipment is for example a mobile phone or a Smartphone, or a tablet.

More generally, the user equipment object of the invention is an NFC decice.

Finally, one object of the invention concerns a computer program, in particular a computer program on or in an information medium or memory, suitable for implementing the method object of the invention. This program can use any programming language, and be in the form of source code, binary code, or of code intermediate between source code and object code such as in a partially compiled form, or in any other desirable form for implementing the communication methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present system and method are explained in further detail, and by way of example, with reference to the accompanying drawings wherein:

The present system and method are explained in further detail, and by way of example, with reference to the accompanying drawings wherein:
FIG. 1 represents a system in which the configuration method of the invention is executed,
FIG. 2 represents the steps of the method for configuring the application object of the invention,
FIG. 3 represents a user equipment 10 capable of executing the method of configuration object of the invention.

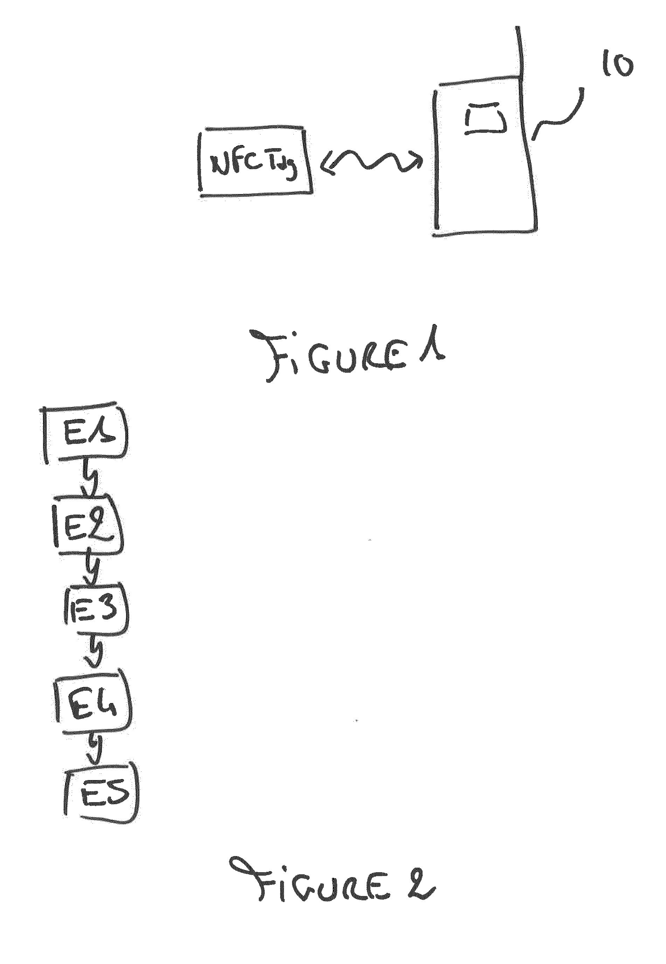

**Figure 1** represents a system in which the configuration method of the invention is executed.

In this system, a user equipment 10, such as a Smartphone or a tablet, communicates with an NFC (Near Field Contact) Tag.

Configuration information of an application, such as a VolP (Voice over IP) application, are stored on the NFC Tag.

When in vicinity of the user equipment 10, the NFC Tag and the user equipment 10 establish a communication session compliant with the requirement of the NCF technology. Once this NFC session is established, the configuration information stored on the NFC Tag are transmitted to the user equipment 10.

**Figure 2** represents the steps of the method for configuring the application object of the invention.

In a step E1, the user equipment 10, by means of their NFC receiving means, receives the configuration information stored on the NFC Tag. Such configuration information are for example : a user name, a SIP-URI address, a password, a proxy server address, etc.

In a step E2, the user equipment 10 deciphers the received configuration information. This step E2 is optional and is only executed when the received configuration information are encrypted.

In a step E3, the user equipment 10 determines whether the received configuration information are valid, i.e. if the received information are configuration information and when they are configuration information if they are fit for being processed by the user equipment 10.

In order to determine the validity of the received configuration information, the user equipment 10 compares the received configuration information with a template of configuration information. Such a template is either stored locally in the user equipment 10 or remotely in a communication network to which the user equipment 10 is attached.

In a step E4, the user equipment 10 determines whether to modify the configuration of the application using the received configuration information.

In order to do so, the user equipment 10 first checks whether the application is already installed in the user equipment 10.

If the application is not installed, then the user equipment 10 installs it either by downloading it through the communication network or by receiving it from the NCF Tag.

If the application is already installed on the user equipment 10, the user equipment 10 compares a first parameter, stored on the user equipment 10, representing the version of the application with a second parameter extracted from the received configuration information representing the current version of the application. These parameters comprise the reference of the version of the application, some option to activate or deactivate, etc.

If the first and second parameters are distinct, i.e. the version of the application stored on the NFC Tag is more recent than the one stored on the user equipment 10, or if there is a change in the options of the application, the user equipment 10 modifies in a step E5 the configuration of the application using the received configuration information.

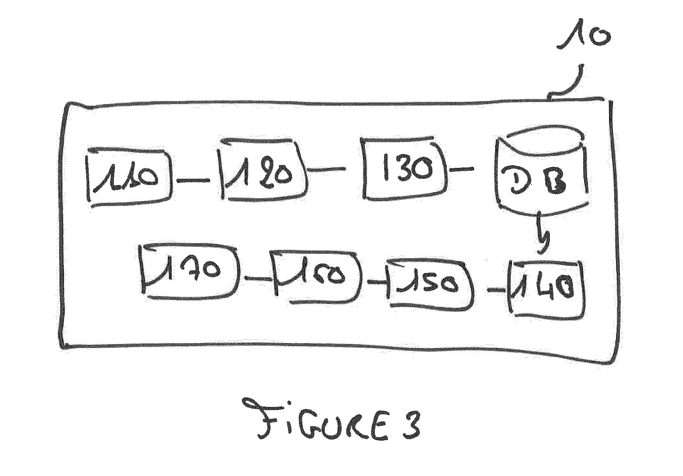

**Figure 3** represents a user equipment 10 capable of executing the method of configuration object of the invention.

The user equipment 10 comprise NFC receiving means 110 capable of the configuration information stored on a NFC Tag.

The user equipment 10 comprises deciphering means 120 for decoding the received configuration information. Those deciphering means 120 are optional and are only embedded in the user equipment 10 when the received configuration information are encrypted.

The user equipment 10 determines whether the received configuration information are valid, i.e. if the received information are configuration information and when they are configuration information if they are fit for being processed by the user equipment 10.

In order to determine the validity of the received configuration information, the user equipment 10 comprises comparing means 130 for comparing the received configuration information with a template of configuration information. Such a template is either stored locally in a database DB of the user equipment 10.

The user equipment 10 determines whether to modify the configuration of the application using the received configuration information.

In order to do so, the user equipment 10 comprises checking means 140 for checking whether the application is already installed in the user equipment 10.

If the application is not installed, then the user equipment 10 comprises means for installing 150 the application it either by downloading it through the communication network or by receiving it from the NCF Tag.

If the application is already installed on the user equipment 10, the user equipment 10 comprises means for comparing 160 a first parameter, stored on the database DB of the user equipment 10, representing the version of the application with a second parameter extracted from the received configuration information representing the current version of the application. These parameters comprise the reference of the version of the application, some option to activate or deactivate, etc.

If the first and second parameters are distinct, i.e. the version of the application stored on the NFC Tag is more recent than the one stored on the user equipment 10, or if there is a change in the options of the application, the user equipment 10 comprises modifying means 170 for modifying the configuration of the application using the received configuration information.

## Claims

1. A method for automatically configuring an application embedded in a user equipment comprising contactless transmission means, the method comprising the following steps executed by the user equipment: Receiving through the contactless transmission means a message comprising configuration information,
- Determining whether the received configuration information are valid,
- If so, determining whether to modify the configuration of the application using the received configuration information.

2. The method according to claim 1, wherein the received configuration information being encrypted, the method comprises, prior to determining the validity of the configuration information, a step of deciphering the received configuration information.

3. The method according to claim 1, wherein the step of determining the validity of the configuration information consists in comparing the received configuration information with a template of configuration information.

4. The method according to claim 1, wherein the step of determining whether to modify the configuration of the application consists in :
- Checking whether the application is already installed in the user equipment,
- If so, comparing a first parameter representing the version of the application with a second parameter extracted from the received configuration information representing the current version of the application,
- If the first and second parameter are distinct, modifying the configuration of the application using the received configuration information.

5. User equipment capable of automatically configuring an application embedded in said user equipment, the user equipment comprising: contactless transmission means enabling the reception of a message comprising configuration information, means for determining whether the received configuration information are valid,
- means for determining whether to modify the configuration of the application using the received configuration information.

6. Computer program **characterized in that** it comprises program code instructions for the implementation of the steps of the method for automatically configuring an application as claimed in claim 1 when the program is executed by a processor.
